# EUROPEAN PATENT APPLICATION

(11) **EP 4 783 416 A1**
(43) Date of publication of application: **29.07.2026**
(21) Application number: 25154272.6
(22) Date of filing: 27.01.2025
(51) Int. Cl.: H02K 1/14, H02K 1/20, H02K 3/22, H02K 3/24, H02K 5/20, H02K 9/197, H02K 21/24

(54) **AXIAL ELECTRIC MOTOR STATOR WITH ENHANCED COOLING MEANS**

(71) Applicant: Axialis j.d.o.o., 21238 Otok (HR)
(72) Inventor: Dula, Marko, 21238 Otok (HR); Cvitkovic, Mislav, 21230 Sinj (HR); Zmire, Marin, 21230 Sinj (HR); Poljak, Jure, 21230 Sinj (HR); Juric, Stjepan, 21204 Dugopolje (HR)
(74) Representative: Bihar, Zeljko

(57) **Abstract**

An axial electric motor stator with enhanced cooling features is disclosed. In a preferred embodiment, each stator segment (110) includes windings made from a single layer of a hollow conductor (120) connected to coolant distributors (130). All coolant distributors (130) are interconnected using flexible hoses (140) and curved inlets (150). The cooling system comprises one or two fluid lines, to which the hollow conductors (120) used for cooling the stator are connected. Each hollow conductor (120) contains an axial cavity and multiple side bores (129) distributed over its surface in contact with the axial cavity. A portion of the hollow conductor ends (125) is electrically connected via an auxiliary conductor and grouped according to the phase system, forming a star connection. The remaining conductor ends (125) are electrically connected via an auxiliary conductor to establish a common electrical ground.

## Description

### Technical Field

The present disclosure pertains to the technical field of dynamo-electric machines, specifically axial electric motors, also known as axial flux motors. It focuses on aspects of the electromagnetic circuit, particularly stationary components, and their cooling facilitated by windings composed of hollow conductors.

### Technical Problem

The present disclosure relates to axial electric motors with permanent magnets. Axial electric motors differ from classical radial electric motors in that the magnetic field flux is directed axially, i.e., parallel to the axis of rotation, while in radial motors, the flux is directed radially, i.e., perpendicular to the axis of rotation. The stator consists of a set of coils arranged in a circular array in a plane such that their characteristic axes are equidistant and coaxial to the axis of rotation. Permanent magnets are placed on the rotor surface, interacting with the rotating magnetic field of the stator.

There are various possible topologies and implementations of axial electric motors with permanent magnets depending on the arrangement and number of stators and rotors, such as described in reference 1:
1) A. Parviainen, DESIGN OF AXIAL-FLUX PERMANENT-MAGNET LOW-SPEED MACHINES AND PERFORMANCE COMPARISON BETWEEN RADIAL-FLUX AND AXIAL-FLUX MACHINES, Ph.D. thesis, Lappeeranta University of Technology, Lappeeranta, Finland, 2005.

Historically, the stator of all conceptualized configurations consisted of stator shoes, slots, and a stator yoke that connects individual coil teeth. A significant improvement in axial electric motor stator design was enabled by the conceptualization of a yokeless stator, whose development process is schematically depicted in reference 2:
2) Woolmer, T. J., & McCulloch, M. D. (2007). ANALYSIS OF THE YOKELESS AND SEGMENTED ARMATURE MACHINE. 2007 IEEE International Electric Machines & Drives Conference. DOI: 10.1109/iemdc.2007.382753

Eliminating the stator yoke has certain advantages and disadvantages. The advantages are a significant reduction in stator mass, reduction in stator iron losses, and shorter axial length of the stator. An additional advantage of eliminating the yoke is the possibility of manufacturing segmented coils with cores made of SMC, i.e., Soft Magnetic Composite material, which greatly simplifies the manufacturing process and highly reduces the eddy currents due to its composite structure. The disadvantages of eliminating the yoke are reduced structural strength of the stator and more difficult stator cooling due to the elimination of the thermally conductive yoke, which is suitable for heat dissipation from the stator iron and coils.

Therefore, this invention addresses the two technical problems simultaneously. The first is effectively cooling the stator segments exactly at the place where the magnetic flux and the windings generate heat. The second is providing a simple assembly method for the stator with enhanced cooling features, despite the added complexity in large-scale manufacturing. This is achieved using hollow conductors with auxiliary side bores for windings and easily interconnected coolant distributor series that circulate coolants through these conductors. The distributors can be interconnected in various configurations, typically forming one or two fluid lines per stator.

Furthermore, this stator design is compatible with different layout geometries, such as R-S, R-S-R, and R-S-R'-S-R, where R and R' represent rotors, and S represents the stator with enhanced cooling features.

### State of the Art

In the current state of the art, there is a vast variety of attempts to solve the technical problems related to the cooling means of the axial flux motors. The most general approach is given in reference 3:
3) EP2396873B1 for ELECTRIC MACHINE-MODULAR, filed in the name of Oxford University Innovation Limited, GB.

It represents the currently standard cooling method for axial electric motors, which involves immersing the stator in a hermetically sealed casing through which transformer oil circulates. The advantage of this cooling design is that the heat source and the cooling fluid are in direct contact, which significantly reduces thermal resistance and increases heat transfer. Despite the improved heat transfer, this design also has several drawbacks.

Furthermore, all problems of the standard cooling techniques are discussed in reference 4:
4) Camilleri, R., Howey, D. A., & McCulloch, M. D. (2016). PREDICTING THE TEMPERATURE AND FLOW DISTRIBUTION IN A DIRECT OIL-COOLED ELECTRICAL MACHINE WITH SEGMENTED STATOR. IEEE Transactions on Industrial Electronics, 63(1), 82-91. DOI: 10.1109/tie.2015.2465902

To achieve better performance, it is necessary the use baffles. A disadvantage of this design is the uneven temperature distribution from the inlet to the outlet of the coolant, which can cause an electromagnetic imbalance in the motor. In addition to the problems in thermal management, this design negatively affects the electromagnetic performance and the stator's strength.

Given the necessity of making the whole stator hermetically sealed, the pole shoes of the stator cores are built into the housing as described in reference 5:
5) EP3044854B1 for STATOR-PLATE OVERMOULDING, filed in the name of Yasa Limited, GB.

The installation of pole shoes in the housing's wall causes a thickening of the air gap between the magnet and the pole shoe, which results in the use of thicker magnets. Since the goal of any electric motor design is to reduce the air gap, it is clear that the wall thickness must be as small as possible. Considering the allowable wall materials, since the walls must not be made of magnetic or electrical material, the choice of materials is significantly limited. Plastics or combinations of glass fibers and epoxy resins are commonly used to make the stator housing, and their strength represents a significant limitation for the structural design of the motor.

Several documents are related to the use of hollow conductors for cooling dynamo-electric machines, see references 6-8:
6) IT201800004700A1 for STATORI PER MACCHINE ELETTRICHE ROTANTI CON INNOVATIVI AVVOLGIMENTI REALIZZATI TRAMITE CONDUTTORI CAVI RAFFREDDATI A FLUIDO, filed in the name of Burigo Mario et. al, IT.
7) EP1953902A2 for TRANSVERSAL FLUX AND SWITCHED RELUCTANCE MOTOR HAVING A TOROIDAL COIL COMPRISING LIQUID COOLING, filed in the name of ArvinMeritor Technology, LLC, US.
8) US2023124875A1 for HIGH TEMPERATURE AND HIGH POWER DENSITY AXIAL FLUX MOTOR, filed in the name of Honeywell International, Inc., US.

Reference 6 describes a general idea of using hollow conductors, while reference 7 uses hollow conductors together with standard conductors for windings cooling. Reference 8 describes the use of hollow copper wire in the construction of an axial electric motor stator, where the coil with hollow copper wire is wound around the stator core. The stator cores are further immersed in cement and then heated to an elevated temperature. Multiple coils manufactured this way are installed in a stator ring, and it is suggested that the cores be cooled by fluid flowing through the hollow copper conductor. In this patent, the emphasis is on the structural design of the stator, while the implementation/solution of the cooling system, apart from the general idea, has not been elaborated.
9) US 9,515,530 for STATOR MODULE AND MAGNETIC FIELD GENERATING STRUCTURE THEREOF, filed in the name of Industrial Technology Research Institute, TW.

Reference 9 discloses a two-line cooling system composed of hollow conductors integrated into the stator teeth. While the system is similar to the present disclosure, the present disclosure employs different hollow conductors for cooling, specifically, hollow conductors with additional auxiliary bores.

Finally, the most relevant references are:
10) WO2024099591A1 for INTERNALLY COOLED COILS AND HOUSING FOR AN ELECTRIC MACHINE, filed in the name of Eaton Intelligent Power Limited, IE.
11) US2024235304A1 for HOLLOW COPPER ELECTRICAL CONDUCTORS, filed in the name of GM Global Technology Operations, LLC, US.

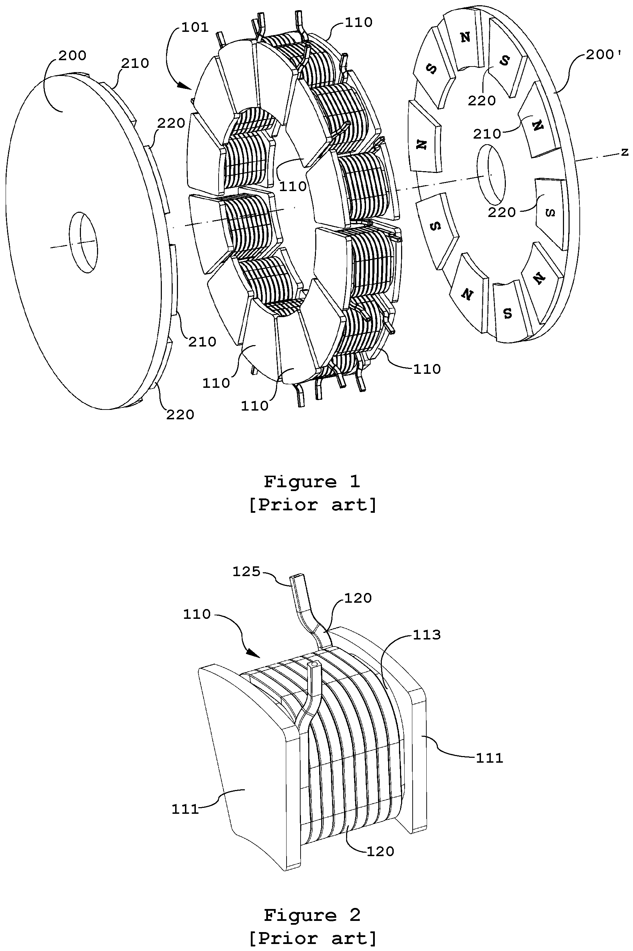

References 10 and 11 represent, perhaps, the closest prior art, depicted in this specification as Figures 1 and 2. The major distinction of the present disclosure from these two references lies in the coolant circulation paths and the type of hollow conductor used for cooling the stator of an axial motor. Unlike References 10 and 11, in the described invention, the coolant circulates not only through the hollow conductors but also through the machine's stators. Specifically, the bores formed on the surfaces of the hollow conductors, along with the hollow conductors themselves, non-trivially combine the advantages of the cooling systems from the cited prior art.

### Summary of the Invention

The disclosure relates to an axial electric motor stator with an enhanced cooling means. The drum-shaped stator comprises a plurality of identical stator segments situated in a circular wreath and spaced apart by an identical gap, with a centrally positioned ring configured for receiving motor bearings, and a rim that encases the stator segments and the cooling means. Each stator segment is formed from a pole core with pole shoes extending in parallel over the pole core and creating a radial H-shaped cross-section of the said segment, allowing the placement of a slot liner over the core and winding a hollow insulated conductor over the slot liner. All stator segments, the ring, and the rim are interconnected and reinforced with cured resin layers having a thickness of approximately the pole shoes and formed as two pairs of interconnecting concentrical wreaths, lying in a plane with their corresponding pole shoes and forming the outer wall of the stator.

Part of the conductor ends are electrically connected via an auxiliary conductor and grouped according to the phase system used, forming the star connection, with lines to their phase connectors situated on the rim. The rest of the conductor ends are electrically connected via an auxiliary conductor, forming an electrical common ground.

The cooling means comprises one or two fluid lines, each comprising a series of coolant distributors with two connecting ends, and elements selected from flexible insulating hoses, insulating curved inlet hoses, or insulating T-shaped inlet hoses and, optionally, stoppers at the ends. All of the said elements are dimensioned to be connected to the coolant distributor ends. The cooling means further comprises hollow conductors connected via the nearest cooling distributor bodies to the fluid lines, and, optionally, one or more channels formed through some or all segment cores and their corresponding slot liners.

The said cooling means has a specific feature that each hollow conductor has an axial cavity and multiple side bores disposed over the conductor's surface, opened into the said axial cavity. Furthermore, both conductor's ends of the same hollow conductor are sealed to their nearest coolant distributors forming the two fluid lines bridged with the said hollow conductors, or, in embodiment where one conductor's end is sealed to its nearest coolant distributor and the other end is sealed with the sealing cap, forming a single fluid line of the said coolant distributors. In addition, at least one drain is provided on the stator's outer surface configured to drain the coolant from the stator.

In one embodiment, the hollow conductors are wound in a single layer over the stator core, with at least some of the bores oriented radially outward from the stator core. In another embodiment, the hollow conductors are wound in a single layer over the stator core, spaced apart from adjacent windings, and at least some of the bores are oriented toward the adjoining windings. In one variant, the layer(s) of hollow conductors wound beside the pole shoes also include(s) additional bores oriented toward the respective pole shoes. In yet another embodiment, the hollow conductors are wound in a single layer over the stator core, with at least some of the bores oriented toward the stator core channels.

In yet another variant, at least some of the flexible insulating hoses are equipped with at least one auxiliary bore, configured to conduct the coolant out from the fluid line directly into the space between the rim and the tops of the stator's segments.

In yet another variant, at least one drain is situated at the rim, preferably oppositely to the inlet hoses. In yet another variant, at least one drain is situated on the ring, configured to transport the coolant for cooling the bearings nested in the said ring.

Preferably, each coolant distributor end is connected to the flexible hose, inlet hoses, or stopper via a friction-fit connection. Furthermore, each coolant distributor is, preferably, metallic and each hollow conductor's end is soldered thereto.

The axial electric motor stator with an enhanced cooling means can be used to form a motor with only one rotor, mounted sidewise, with the axle passing through the bearings nested in the stator ring. Also, it can be used to form a motor with two rotors, each mounted on one side of the said stator and connected with the same axle, passing through the bearings nested in the stator ring. Other variants are also disclosed, such as a motor with three rotors, where two rotors are mounted on the outer sides of two stators, all connected with the same axle, which passes through the bearings nested in the stator rings with the slim rotor sandwiched between the stators and connected to the same axle.

### Description of Figures

Figure 1 and Figure 2 represent the prior art solution of the active stator part, composed of segments wound with hollow conductors used as part of the cooling system.
Figure 3 illustrates one variant of the hollow conductor used in this disclosure, which features multiple side bores distributed across its surface for dripping coolant liquid.
Figure 4 shows an enhanced hollow conductor, according to one variant of the disclosure, wound in a single layer over the stator segment core. This configuration is similar to the Figure 2 configuration, but the side bores are oriented radially outward from the core.
Figure 5 depicts a cross-section of the segment core with the hollow conductor wound in one layer over the core. Optional channels are formed across the core, and a slot liner is disposed over it.
Figure 6 shows a hollow conductor wound over the stator segment core, with its ends connected to two coolant distributors. Figure 7 presents a similar configuration, but with a sealing cap mounted on one end of the conductor while the other end remains connected to the coolant distributor. In both figures, the side bores of the conductors are oriented radially outward from the core.
Figure 8 displays a hollow conductor wound over the stator segment core, with gaps between adjacent windings. Here, the bores are oriented toward the adjoining windings or pole shoes. The standalone conductor, without the core and pole shoes, is shown in Figure 9.
Figure 10 illustrates a stator segment core equipped with channels, where arrows indicate the coolant's circulation path across the core.
Figure 11 highlights a conductor designed to align with these channels, with side bores positioned to match the channel inlets.
Figure 12 demonstrates an embodiment with two fluid lines equipped by stoppers and bridged by a series of hollow conductors. Figure 13 shows a variation where the fluid lines use T-shaped inlet hoses instead of stoppers, with hollow conductors bridging the lines.
Figure 14 features an embodiment with a single fluid line equipped with a stopper. A series of hollow conductors are attached to this line at one end, while the opposite hollow conductor ends are sealed.
Figure 15 and Figure 16 show insets taken from Figure 12 and Figure 14, respectively.
Figure 17 presents a variant where flexible hoses connecting the fluid distributors include an auxiliary bore.
Figure 18 provides an overview of the stator's internal element distribution. Figure 19 offers a perspective view of the stator's cross-section, while Figure 20 shows a direct view of the same cross-section.
Figures 21, 22, and 23 depict possible rotor (R) and stator (S) configurations: R-S, R-S-R, and R-S-R'-S-R, respectively.

### Detailed Description of the Invention

The present disclosure focuses on enhancing the cooling mechanisms employed in the stator of an axial electric motor. As evidenced by the cited prior art, two major cooling systems are commonly used. The first involves immersing stator components in circulating transformer oil, while the second utilizes hollow conductors to transmit electric current and circulate coolant through the stator. This disclosure introduces a novel, non-trivial combination of these two approaches, optimized to achieve superior cooling by channeling coolant through the entire stator and its associated components.

Figures 1 and 2 illustrate the prior art design of the active stator part (101), which comprises segments (110) wound with hollow conductors (120) that function as part of the cooling system. In

Figure 1, the rotor (200) incorporates alternately arranged permanent magnets: magnets (210) with their N-poles facing the active stator part (101), and magnets (220) with their S-poles oriented toward the stator part (101). An axle (400), aligned with the z-axis, is secured using suitable bearings to enable motor rotation.

The permanent magnets are arranged in a conventional configuration to establish magnetic circuits that propagate through the first rotor (200), the stator (100), and the second rotor (200'). This arrangement also ensures that the magnets (210, 220) are angularly offset in phase, such that a permanent magnet (210) on the first rotor directly opposes a permanent magnet (220) on the second rotor, and vice versa.

From the prior art, it is clear that the coolant comes into contact only with the inner surface of the hollow conductor, specifically its axial cavity (122). This results in a relatively modest total surface area available for heat transfer to the cooling medium, even though most of the heat is generated in the stator segments (110), as shown in Figure 2.

In contrast, standard cooling solutions using solid, non-hollow conductors provide access to all parts of axial motors with the coolant. However, these systems face significant limitations. Due to the thermal barrier created by the isolation of the conductors (120), it is hard to extract heat effectively from the primary heat-generating areas. Additionally, the inner circulation of the oil can be problematic and often requires baffles to improve flow and heat dissipation in the motor. The embodiments described below appear to overcome all the drawbacks of the systems currently in use.

### Stator construction and stator elements

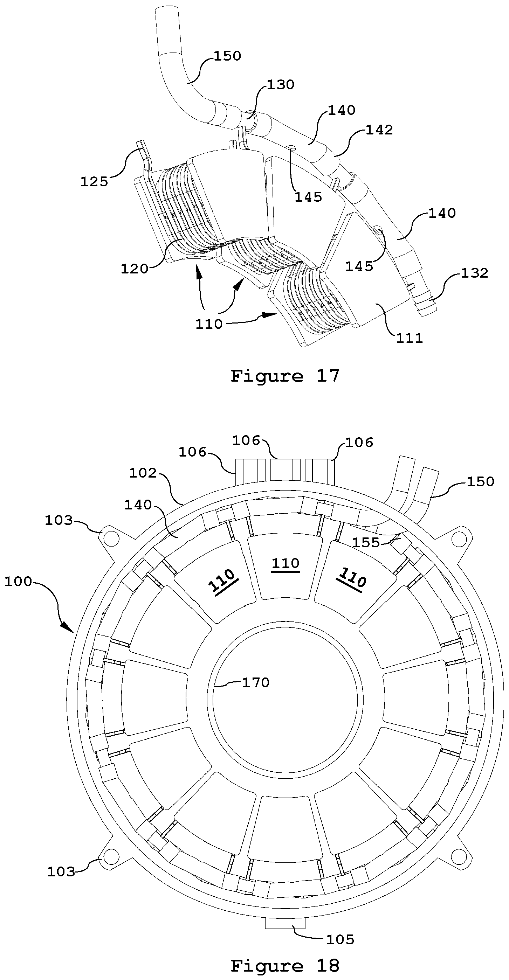

The stator (100) construction is depicted in Figures 18-20. The axial electric motor stator (100), with an enhanced cooling means, is drum-shaped as known from the prior art. This stator (100) has an active part (101), similar to that depicted in Figure 1, with a plurality of identical stator segments (110). The number of segments depends on the phase numbers and the chosen number of poles, where the said number of segments divided by the number of phases is an integer.

The segments (110), as depicted in Figures 1 and 18, are arranged in a circular wreath and spaced apart by an identical gap. In the center of the stator (100) is a ring (170) configured for receiving motor bearings. The outer side of the stator (100) is enclosed with a rim (102), which encases the stator segments (110) and cooling means - whose role will be described later.

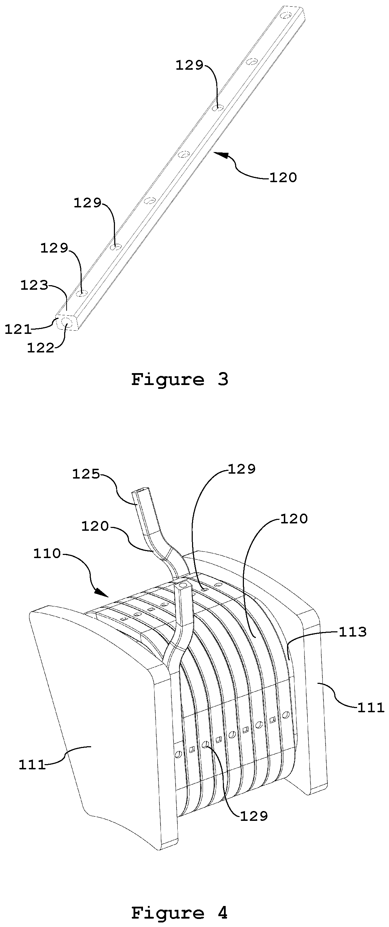

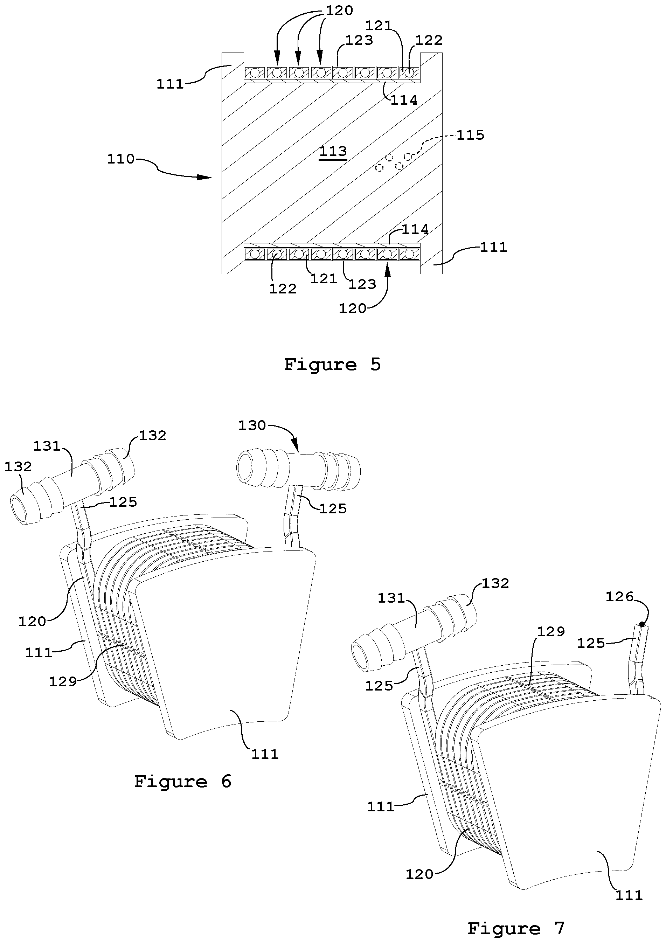

Each segment (110) is formed of a pole core (113) with pole shoes (111) extending in parallel over the pole core (113), and creating a radial H-shaped cross-section of the said segment (110), as depicted in Figures 4 and 5. Each stator segment core (113) and the accompanying pole shoes (111) are made, preferably, of SMCs (Soft Magnetic Composites) or electrical steel, as detailed in references 12 and 13.
12) Shokrollahi, H., and Janghorban, K. (2007). Soft magnetic composite materials (SMCs). Journal of Materials Processing Technology, 189(1-3), 1-12. DOI: 10.1016/j.jmatprotec.2007. 02.034
13) https://en.wikipedia.org/wiki/Electrical_steel

The aforementioned radial H-shaped cross-section of the said segment (110) allows the placement of a slot liner (114) over the core (113) and winding a hollow insulated conductor (120) over the slot liner (114). Slot liners are commonly used in the field and selected based on their thermal properties. Usually, the slot liner's primary role in the electric rotational machines is to protect the winding from an electrical grounding during operation which may occur due to conductor friction with the core.

In this particular disclosure, see Figure 5, the core may be provided with additional channels formed through the core (113) and the corresponding slot liner (114), which are designed to enhance cooling of the core (113) . This detail will be discussed further in the examples.

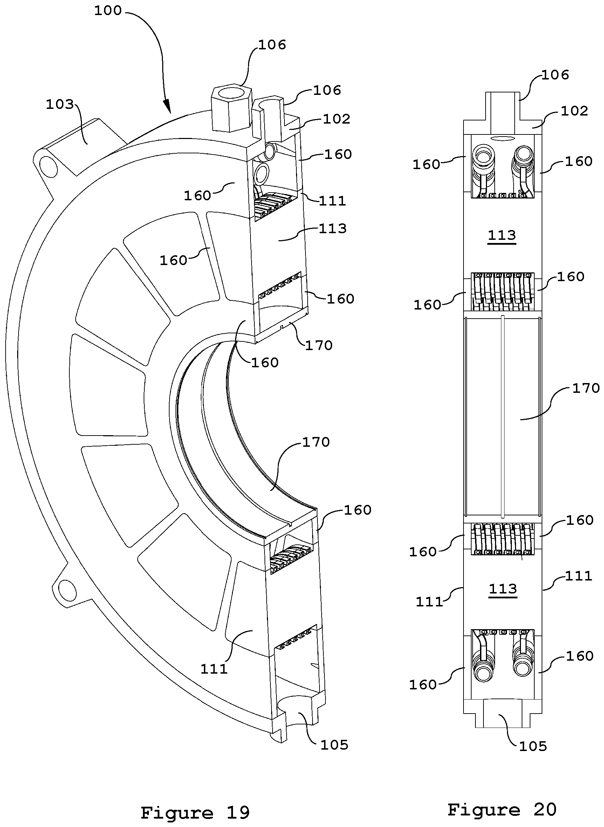

The stator (100) has to be mechanically solid. According to the disclosure, all segments (110), the ring (170), and the rim (102) are interconnected and reinforced with cured resin (160) layers, as depicted in Figures 19 and 20. These resin (160) layers have a thickness approximately equal to that of the pole shoes (111) and are formed as two pairs of interconnected concentric wreaths. One pair is situated above the pole shoes (111) and the rim (102), while the other pair is positioned below the pole shoes (111) and the ring (170). Both pairs are interconnected via resins (160) layers situated within the segments' internal gaps, as shown in Figure 19. The resin (160) layers lie in a plane with their corresponding pole shoes (111), see Figure 20, and form the outer wall of the stator (100).

The upper space, situated above the segments (110) and the rim (102), and the lower space situated below the segments (110) and the ring (170) are designed to act as communication chambers for cooling liquids, allowing them to circulate freely from the upper space to the lower space and back.

As explained in the prior art, windings are made from hollow insulated conductors (120) wound over the slot liner (114), as depicted in Figure 2 relating to the prior art, or, in Figure 4, in case of the present disclosure. Some of the hollow conductor ends (125) from different segments (110) are electrically connected via an auxiliary conductor and grouped according to the phase system used, forming a star connection, with lines to their phase connectors (106) situated on the rim (102) . The rest of the conductor ends (125) are electrically connected via an auxiliary conductor, forming a common electrical ground.

The rim (102) is equipped with one or more fixing eyelets (103) and one or more cooling means drains (105), as depicted in Figures 19 and 20.

### Hollow conductor

The key to enabling this disclosure is the hollow conductor (120) presented in Figure 3. The hollow conductor (120) is manufactured as an elongated conductive body (121) or conductive part, with an axial cavity (122) extending along its length. The conductor is isolated using a method known in the art, such as deposited varnish or a similar technique, forming the insulating layer (123). Such a conductor can be found, for instance in reference 14:
14) Dynamic E flow GmbH, describes hollow conductor technology as implemented: https://www.dynamiceflow.com/technology

However, to implement the disclosure, the hollow conductor (120) has to be adapted to meet specific requirements. Each hollow conductor (120) includes an axial cavity (122) and multiple side bores (129) distributed over the conductor's surface, connected to the said axial cavity (122). The side bores (129) distribution is chosen according to the embodiments discussed below.

### Cooling means

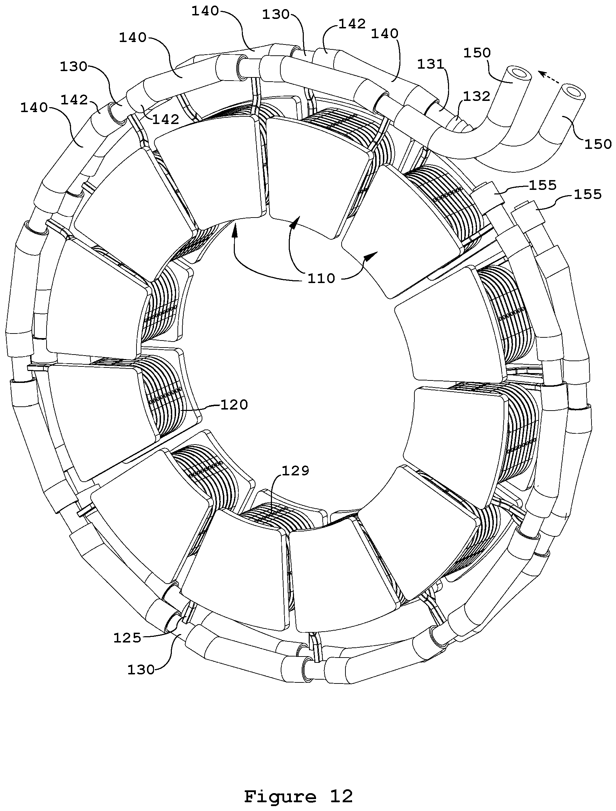

A cooling means, according to the disclosure, comprises one or two fluid lines composed of different elements and corresponding variants. Each fluid line is composed of a series of interconnected coolant distributors (130), as depicted in figures 12-17.

Coolant distributors (130) are specifically depicted in Figures 6 and 7. Each has a body (131) and two connecting ends (132). The body (131) is equipped with the centrally formed connecting means, i.e., preferably a bore, to which the conductor's end (125) can be inserted and, in a preferred embodiment, soldered thereto. The technical role of the coolant distributors (130) is to provide a coolant stream into or out of the hollow conductor (120). In a preferred embodiment, the coolant distributors (130) are made of metal to allow simple and automated soldering with the conductor ends (125), as known from the prior art. Two connecting ends (132) are, preferably, designed to allow simple and fast friction-fit connection with other elements. The person skilled in the art will immediately recognize other trivial modifications for forming coolant distributors (130) to achieve the same technical effect of distributing the coolant.

The coolant distributors are, *in situ,* inter-connected via insulating flexible hoses (140). Each flexible hose (140) is equipped with connecting means (142) capable of interacting with any distributor end (132) to form a sealed connection. In a preferred embodiment it is a friction-type sealing known in the prior art, where connection means (142) has a slightly smaller diameter than the ribbed connection end (132) formed on each coolant distributor (130). Preferably hoses (140) are made of polyvinyl chloride (PVC), polyethylene (PE), crosslinked polyethylene pipes (PEX), metal-plastic pipes (PEX-AL-PEX), polytetrafluoroethylene (PTFE) or similar suitable low-conducting materials. It is critical to ensure that the metal distributors (130) should not be electrically connected among themselves, via the said hoses (140).

In one variant, some flexible hoses (140) may be equipped with one or more auxiliary bores (145), preferably positioned centrally on the hose (140), as depicted in Figure 17. These bores (145) enable direct circulation of the coolant from the fluid lines to the drain (105).

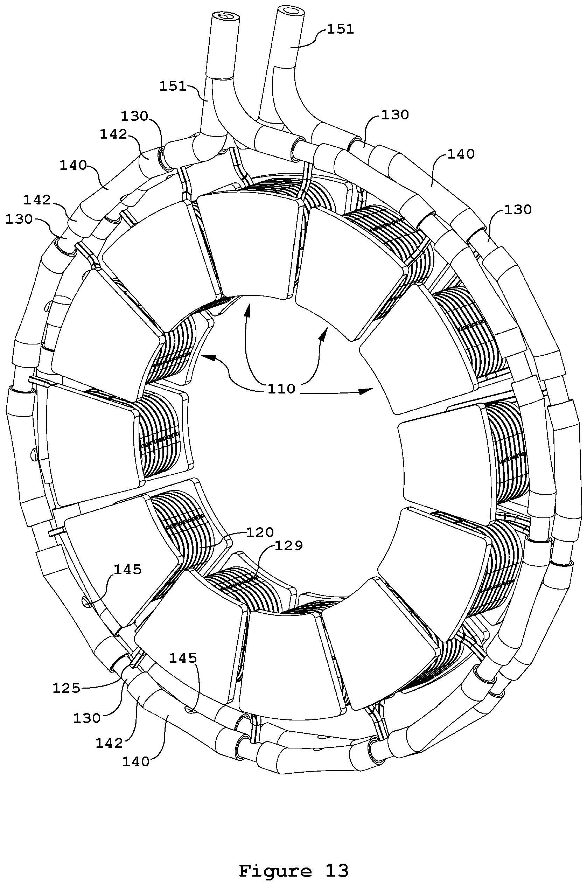

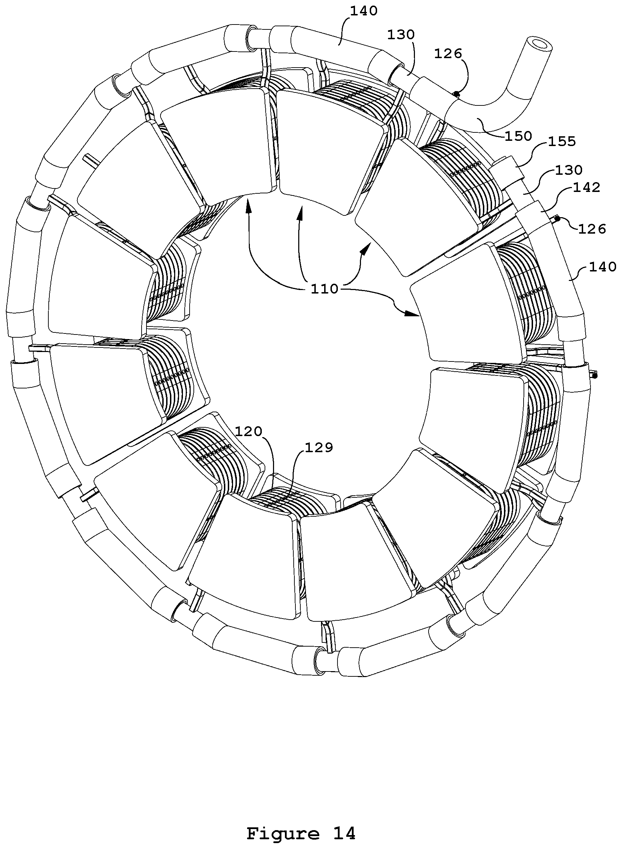

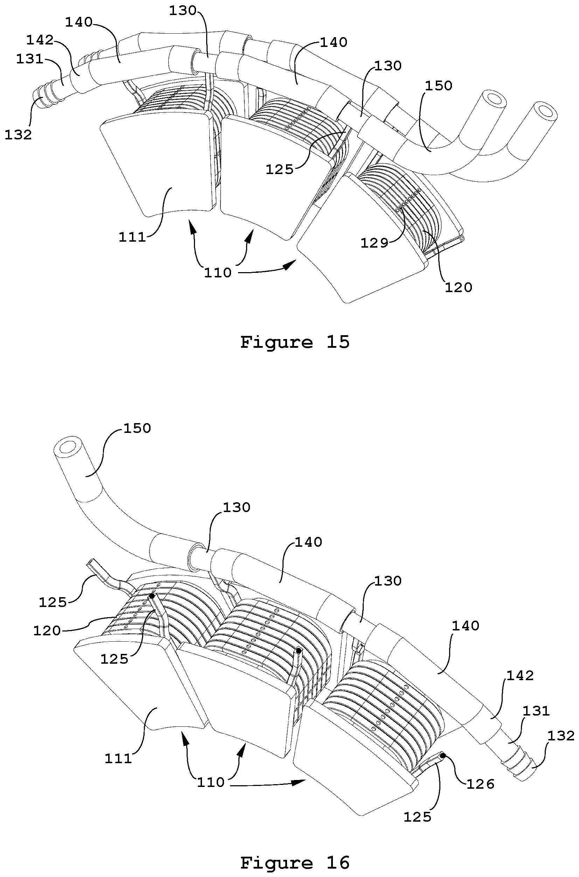

Two types of inlet hoses are disclosed in this design: the first is a standard inlet hose (150) shown in Figures 15 and 16, and the second is a T-shaped inlet hose (151) illustrated in Figure 13. Both hoses (150, 151) share the same material composition and functionality as in the flexible hoses (140). When the standard inlet hose (150) is used at the start of the fluid line, its open end must be sealed with a stopper (155), as shown in Figures 12 and 14. The friction connection between the inlet hose (150) and the first coolant distributor (130) is indicated by an arrow in Figure 12, highlighting its attachment to the distributor's ribbed end (132). Stoppers (155) are preferably fabricated from the same low-conducting material used for hoses (140, 150, 151). The technical role of the inlet hoses (150, 151) is to inject the coolant into the stator (100), as illustrated in Figure 18, via an external pumping means which is not shown in the accompanied figures.

In some embodiments, where only one fluid line is employed, the free conductor ends (125) must be sealed with a sealing cap (126), as shown in Figures 7, 14, and 16. The sealing caps (126) can be fabricated from plastic or metal materials and are affixed to conductor ends (125) using gluing or soldering, respectively. The primary function of the sealing cap (126) is to prevent coolant from draining, except through bores (129) disposed over the hollow conductor (120).

For coolant selection, it is mandatory to use a non-conductive coolant with appropriate dielectric strength and thermal stability, preferably fire-resistant and chemically inert. Suitable options include synthetic esters, silicone-based fluids, deionized water, hydrofluoroethers (HFEs), mineral (dielectric) oils, polyalphaolefins (PAOs), and other substances commonly used in the field.

Several examples of the cooling systems will be detailed in the sections below.

### Example 1

This example is depicted in Figure 12. The system employs two fluid lines, each comprising a series of interconnected fluid distributors (130) joined by flexible hoses (140). Each line begins with an inlet hose (150) and terminates at a stopper (155). Notably, the flexible hoses (140) in this example lack auxiliary bores (145).

The stator segment (110) is shown in Figures 4 and 6. Each conductor end (125) is inserted in the nearest distributor (130), and the system includes one or more drains (105).

Hollow conductors (120) bridge the said two fluid lines.

The hollow conductors (120) are wound in a single layer over the stator core (113), where at least some of their bores (129) are oriented radially outward from the stator core (113).

Advantage: Simultaneous pumping of coolant into both lines enhances cooling efficiency for the pole shoes (111). This occurs because the cooler coolant first contacts regions of the stator core (113) located closer to the pole shoes (111).

### Example 1A

This setup mirrors Example 1, with the exception that two T-shaped inlet hoses (151) replace the standard inlet hoses (150) and stoppers.

Advantage: The T-shaped design ensures more uniform fluid pressure distribution across the fluid lines.

### Example 2

This setup mirrors Example 1 but differs in the hollow conductor (120) configuration.

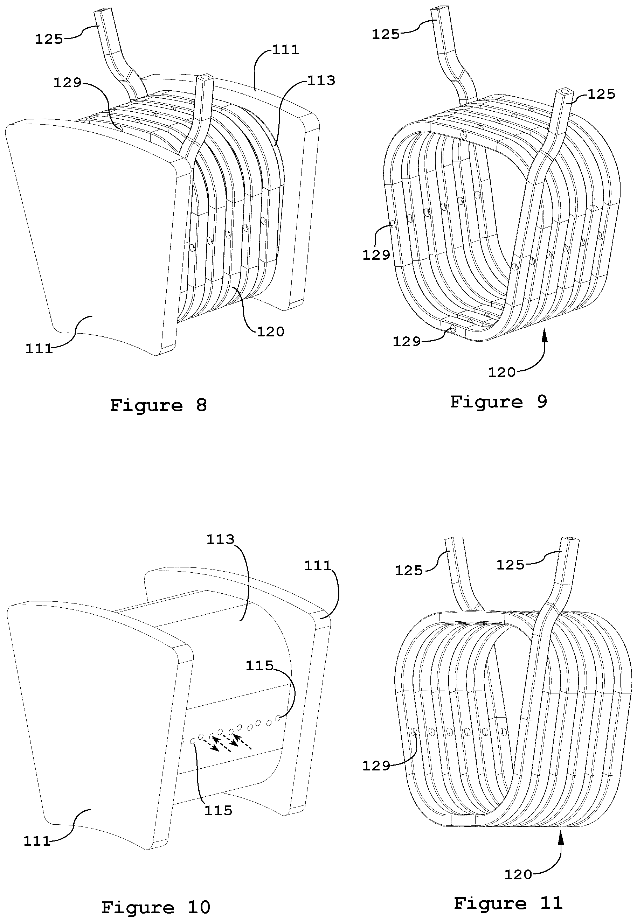

The current example employs the hollow conductor (120) shown in Figure 9, which is integrated into the stator segment (110) illustrated in Figure 8. These hollow conductors (120) are wound in a single layer over the stator core (113), with intentionally left gaps between adjacent windings. At least some of the bores (129) on the conductors (120) are oriented toward adjoining windings.

In one variant, the hollow conductors (120) are modified to include additional bores (129) oriented toward the nearest pole shoes (111).

Advantage: This design enhances cooling efficiency for both the stator core (113) and pole shoes (111). However, it results in lower magnetic flux compared to Example 1 due to the reduced active length of the conductor.

### Example 2A

This setup mirrors Example 2 but replaces the standard inlet hoses (150) and stoppers (155) with two T-shaped inlet hoses (151).

Advantage: The T-shaped configuration ensures more uniform fluid pressure distribution across the fluid lines while retaining the advantages outlined in Example 2.

### Example 3

This setup mirrors Example 1 but differs in the hollow conductor (120) design.

The current example employs the hollow conductor (120) shown in Figure 11, integrated into the stator segment (110) configured with channels (115) machined into the stator core (113), as illustrated in Figure 10. These hollow conductors (120) are wound in a single layer over the stator core (113), with at least some of their bores (129) oriented toward the channels (115) within the core. The channels (115) are preferably arranged to align coolant flow along the paths indicated by the arrows in Figure 10.

In some variants, multiple layers of channels (115) may be incorporated. However, this design reduces magnetic flux density within the core (113) due to the reduced cross-section available for magnetic flux cogeneration.

Advantage: Fluid pressure across the lines is leveraged to enable direct cooling of the stator core (113) via the integrated channels (115) .

### Example 3A

This setup mirrors Example 3 but replaces the standard inlet hoses (150) and stoppers (155) with two T-shaped inlet hoses (151).

Advantage: The T-shaped configuration ensures more uniform fluid pressure distribution across the fluid lines while retaining the advantages outlined in Example 3.

### Example 4

This configuration is illustrated in Figure 14. The system employs a single fluid line composed of a series of interconnected fluid distributors (130) joined by flexible hoses (140). The line begins with an inlet hose (150) and terminates at a stopper (155). Notably, the flexible hoses (140) in this design lack auxiliary bores (145).

The stator segment (110) is shown in Figures 5 and 7. One conductor end (125) is inserted into the nearest distributor (130), while the opposing end is sealed with a sealing cap (126). The system includes one or more drains (105).

Hollow conductors (120) are wound in a single-layer configuration over the stator core (113), with at least some of their bores (129) oriented outward from the core (113).

Advantage: This design is simpler to manufacture than Example 1, though it offers moderately reduced cooling performance.

### Example 4A

This setup mirrors Example 4 but replaces the standard inlet hose (150) and stopper (155) with T-shaped inlet hoses (151).

Advantage: The T-shaped configuration ensures more uniform fluid pressure distribution across the fluid line while retaining the advantages outlined in Example 4.

### Example 5

This setup mirrors Example 4 but differs in the hollow conductor (120) configuration.

The current example employs the hollow conductor (120) shown in Figure 9, integrated into the stator segment (110) illustrated in Figure 8. These hollow conductors (120) are wound in a single layer over the stator core (113), with spaces between adjacent windings. At least some of the bores (129) are oriented toward adjoining windings.

In one variant, the hollow conductors (120) are modified to include additional bores (129) directed toward the nearest pole shoes (111).

Advantage: This design improves cooling efficiency for both the stator core (113) and pole shoes (111). However, it results in reduced magnetic flux compared to Example 4 due to the shorter active length of the conductor.

### Example 5A

This setup mirrors Example 5 but replaces the standard inlet hose (150) and stopper (155) with T-shaped inlet hoses (151).

Advantage: The T-shaped configuration ensures more uniform fluid pressure distribution across the fluid line while retaining the advantages outlined in Example 5.

### Example 6

This setup mirrors Example 4 but differs in the hollow conductor (120) design.

The current example employs the hollow conductor (120) shown in Figure 11, integrated into the stator segment (110) configured with channels (115) machined into the stator core (113), as illustrated in Figure 10. These hollow conductors (120) are wound in a single layer over the stator core (113), with at least some of their bores (129) oriented toward the channels (115) within the core. The channels (115) are preferably arranged to align coolant flow along the paths indicated by the arrows in Figure 10.

In some variants, multiple layers of channels (115) may be incorporated. However, this design reduces magnetic flux density within the core due to the reduced cross-section available for magnetic flux cogeneration.

Advantage: Fluid pressure across the line is leveraged to enable direct cooling of the stator core (113) via the integrated channels (115) .

### Example 6A

This setup mirrors Example 6 but replaces the standard inlet hose (150) and stopper (155) with T-shaped inlet hoses (151).

Advantage: The T-shaped configuration ensures more uniform fluid pressure distribution across the fluid line while retaining the advantages outlined in Example 6.

### Example 7

This setup mirrors any of the previously mentioned configurations in Examples 1, 1A, ..., 6, 6A; with the key distinction that at least some flexible insulating hoses (140) are equipped with one or more auxiliary bores (145). These bores (145) are positioned to direct coolant from the fluid line(s) directly into the space between the rim (102) and the tops of the stator segments (110). The number and dimensions of the auxiliary bores (145) are optimized to ensure efficient fluid circulation across the stator (100).

Advantage: Fluid pressure is distributed evenly across the entire stator (100), rather than being concentrated near the segment cooling elements comprising hollow conductors (120).

### Example 8

This setup mirrors any of the previously mentioned configurations in Examples 1, 1A, ..., 6, 6A, and 7. The sole distinction lies in positioning at least one drain (105) at the rim (102), preferably opposite the inlet hoses (150, 151).

Advantage: This configuration ensures coolant circulation across the entire volume of the stator (100).

### Example 9

This setup mirrors any of the previously mentioned configurations in Examples 1, 1A, ..., 6, 6A, 7, and optionally 8. The sole distinction is that at least one drain (105) is positioned on the ring (170), designed to direct coolant toward cooling the bearings housed within the ring (170).

Advantage: This configuration enables radial coolant circulation across the entire stator (100) volume (when drains are positioned near the ring (170)) while also facilitating bearing cooling as previously described.

### Example 10

A person skilled in the art will recognize that any viable combination of the embodiments described in the preceding examples can be trivially integrated into a new configuration.

For instance, Example 1 can be combined with Example 2, incorporating an additional set of bores (129) into Example 2 design. These bores (129) would be oriented radially outward from the stator core (113), as demonstrated in Example 1.

Given the vast number of potential combinations, it is impractical to enumerate each configuration or speculate on the performance gains/losses of such cooling configurations.

### Use examples 11-13

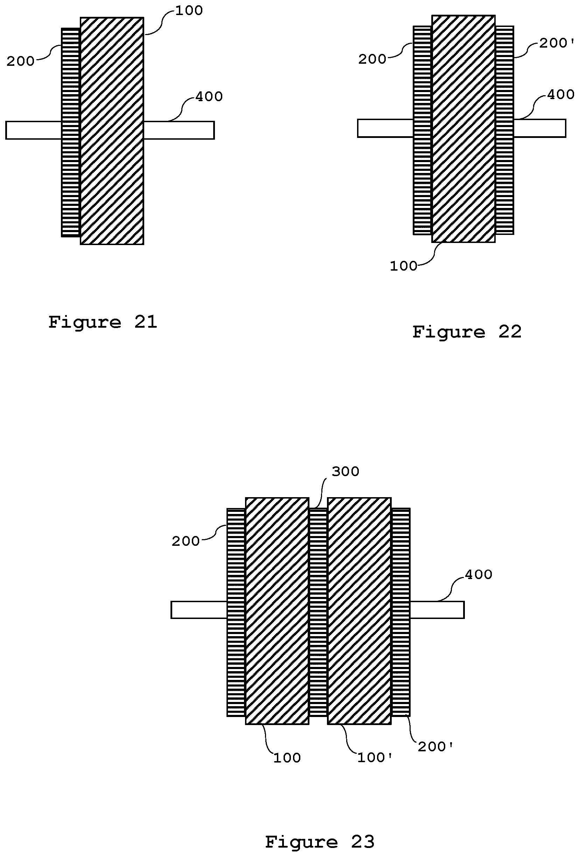

Figures 21, 22, and 23 illustrate potential rotor-stator configurations (R-S, R-S-R, and R-S-R'-S-R, respectively) under this disclosure. These configurations align with prior art, as described in Reference 1, Page 17.

Example 11 is shown in Figure 21. The R-S configuration features a single side-mounted rotor (200) coupled with a stator (100). The axle (400) passes through bearings housed within the stator ring (170).

Example 12 is shown in Figure 22. The R-S-R configuration incorporates two rotors (200, 200'), positioned on either side of the stator (100) and connected to the same axle (400), which runs through bearings nested in the stator ring (170). The internal stator configuration aligns with the design shown in Figure 1.

Example 13 is shown in Figure 23. The R-S-R'-S-R configuration includes two stators (100, 100') and three rotors. Two outer rotors (200, 200') mounted on the extremities of the axle (400), which passes through bearings in the respective stator rings (170, 170'). A slim rotor (300) is positioned between the stators (100, 100') and connected to the same axle (400). The slim rotor (300) is optimized for compactness, comprising only magnet thickness and no back iron, as detailed in Reference 1, Figure (d).

### Industrial Applicability

The industrial applicability of the disclosed invention is evident. This innovation introduces an enhanced cooling mechanism for axial electric motor stators, utilizing hollow conductors with precision-engineered side bores machined into their surfaces. The design ensures efficient thermal management while maintaining structural integrity, making it suitable for high-performance applications requiring prolonged operational durability.

### Reference numbers

- 100: Stator
- 101: Stator, active part
- 102: Rim
- 103: Fixing eyelet
- 105: Drain
- 106: Electric connector
- 110: Stator segment
- 111: Pole shoe
- 113: Pole core
- 114: Slot liner
- 115: Channel
- 120: Hollow conductor
- 121: Conductive part
- 122: Axial cavity
- 123: Insulation layer
- 125: End
- 126: Sealing cap
- 129: Bore
- 130: Coolant distributor
- 131: Body
- 132: Connecting end
- 140: Flexible hose
- 142: Connecting means
- 145: Auxiliary bore
- 150: Inlet hose
- 151: T-shaped inlet hose
- 155: Stopper
- 160: Resin
- 170: Ring
- 200: Rotor
- 210: Permanent magnet
- 220: Permanent magnet
- 300: Slim rotor
- 400: Axle

## Claims

1. An axial electric motor stator (100) with an enhanced cooling means,
- wherein the drum-shaped stator (100) comprises a plurality of identical stator segments (110) situated in a circular wreath and spaced apart by uniform gaps, with a centrally positioned ring (170) configured for receiving motor bearings, and a rim (102) which encases the stator segments (110) and the cooling means,
- where each segment (110) is formed from a pole core (113) with pole shoes (111) extending parallel along the pole core (113) and creating a radial H-shaped cross-section of the said segment (110), allowing the placement of a slot liner (114) over the core (113) and winding a hollow insulated conductor (120) over the slot liner (114),
- all segments (110), the ring (170), and the rim (102) are interconnected and reinforced with cured resin (160) layers having a thickness of approximately equal to that of the pole shoes (111) and formed as two pairs of interconnecting concentrical wreaths, lying in a plane with their corresponding pole shoes (111) and forming the outer wall of the stator (100),
- where some of the conductor ends (125) are electrically connected via an auxiliary conductor and grouped according to the phase system used forming a star connection, with lines to their phase connectors (106) situated on the rim (102), while the rest of the conductor ends (125) are electrically connected via an auxiliary conductor, forming an electrical common ground,
- where the cooling means comprises one or two fluid lines, each comprising a series of coolant distributors (130) with two connecting ends (132), and components selected from flexible insulating hoses (140), insulating curved inlet hoses (150), or insulating T-shaped inlet hoses (151) and, optionally, stoppers (155); where all of the said components are dimensioned to be connected to the coolant distributor ends (132);
- where the cooling means further comprises hollow conductors (120) connected via the nearest cooling distributor bodies (131) to the fluid lines, and, optionally, one or more channels (115) formed through some or all segment cores (113) and their corresponding slot liners (114),
where the said cooling means is **characterized in that**,
- each hollow conductor (120) has an axial cavity (122) and multiple side bores (129) disposed over the conductor's surface and in contact with the said axial cavity (122),
- where both ends (125) of the same hollow conductor (120) are sealed to their nearest coolant distributors (130) forming two fluid lines bridged with the said hollow conductors (120), or, where one conductor's end (125) is sealed to its nearest coolant distributor (130) and the other end is sealed with a sealing cap (126), forming a single fluid line of the coolant distributors (130), and
- with at least one drain (105) provided on the stator's outer surface configured to drain the coolant from the stator (100).

2. The axial electric motor stator (100) with enhanced cooling means according to claim 1, wherein the hollow conductors (120) are wound in a single layer around the stator core (113), and wherein at least some of the bores (129) are oriented radially outward from the stator core (113).

3. The axial electric motor stator (100) with enhanced cooling means according to claim 1, wherein the hollow conductors (120) are wound in a single layer around the stator core (113), with spaces between adjacent windings, and wherein at least some of the bores (129) are oriented toward the adjoining windings.

4. The axial electric motor stator (100) with enhanced cooling means according to claim 3, wherein the hollow conductors (120) are further configured to include additional bores (129) that are oriented toward the nearest pole shoes (111).

5. The axial electric motor stator (100) with an enhanced cooling means according to claim 1, wherein the hollow conductors (120) are wound in a single layer around the stator core (113), and wherein at least some of the bores (129) are oriented toward the stator core channels (115).

6. The axial electric motor stator (100) with enhanced cooling means according to any of the preceding claims, wherein at least some of the flexible insulating hoses (140) include at least one auxiliary bore (145) configured to direct coolant from the fluid line into the space between the rim (102) and the upper surfaces of the stator segments (110).

7. The axial electric motor stator (100) with enhanced cooling means according to any of claims 1-6, wherein at least one drain (105) is positioned on the rim (102), preferably opposite the inlet hoses (150, 151).

8. The axial electric motor stator (100) with enhanced cooling means according to any of claims 1-6, wherein at least one drain (105) is positioned on the ring (170) and configured to channel coolant for cooling bearings housed within the ring (170).

9. The axial electric motor stator (100) with an enhanced cooling means according to any of the preceding claims, wherein each coolant distributor (130) is metallic and each hollow conductor's end (125) of the hollow conductor (120) is soldered to a coolant distributor (130).

10. The axial electric motor stator (100) with enhanced cooling means according to any of the preceding claims, wherein each end (132) of the coolant distributor (130) is connected to the flexible hose (140), the inlet hoses (150, 151), or the stopper (155) via a friction-fit connection.

11. Use of the axial electric motor stator (100) with enhanced cooling means according to any of claims 1-10 to form a motor comprising a single rotor (200) mounted sideways, and an axle (400) passing through bearings housed within the ring (170).

12. Use of the axial electric motor stator (100) with enhanced cooling means according to any of claims 1-10 to form a motor comprising two rotors (200, 200'), each mounted on one side of the stator (100), and a single axle (400) connecting both rotors (200, 200') and passing through bearings housed within the ring (170).

13. Use of two axial electric motor stators (100, 100') with enhanced cooling means according to any of claims 1-10 to form a motor comprising two rotors (200, 200') mounted on outer sides of the two stators (100, 100'), a single axle (400) connecting the rotors (200, 200') and passing through bearings housed within the rings (170, 170') of the stators (100, 100'), and a thin rotor (300) positioned between the stators (100, 100') and connected to the axle (400).
